Europäisches Patentamt

European Patent Office

Office européen des brevets

(11) Veröffentlichungsnummer: **0 422 274 A1**

## (12) EUROPÄISCHE PATENTANMELDUNG

(21) Anmeldenummer: 89118997.9

(22) Anmeldetag: 12.10.89

(51) Int. Cl.⁵: **H02M 3/337**

(43) Veröffentlichungstag der Anmeldung:
**17.04.91 Patentblatt 91/16**

(84) Benannte Vertragsstaaten:
**AT BE CH DE ES FR GB GR IT LI LU NL SE**

(71) Anmelder: **Siemens Aktiengesellschaft
Wittelsbacherplatz 2
W-8000 München 2(DE)**

(72) Erfinder: **Blöckl, Reinhard, Dipl.-Ing.
Hauptstrasse 112
W-8025 Unterhaching(DE)**

(54) Verfahren zum Steuern von Gegentakt-Serien-Resonanzwandler-Schaltnetzteilen mit geregelter Ausgangsspannung.

(57) Es wird ein Verfahren angegeben, zum Steuern eines Gegentakt-Serien-Resonanzwandler-Schaltnetzteiles mit einem induktiven Übertrager (T) mit einer Primärwicklung (Wp) und mindestens einer Sekundärwicklung (Ws1, Ws2), mit zwei Halbleiterschaltern (Q1, Q2), die in Halbbrückenschaltung zwischen einem Eingangspotential (Ui) und einem Eingangsbezugspotential (Oi) angeordnet sind und zwischen deren Verbindungsknoten (3) und dem Eingangsbezugspotential (Oi) ein Serienresonanzkreis, bestehend aus einer Kapazität (Cr) und einer Induktivität (Lr) in Serie mit der Primärwicklung (Wp) des Übertragers (T) angeordnet ist, wobei Dioden (D1, D2) vorgesehen sind, die verhindern, daß die Spannung (uc) an der Kapazität (Cr) die Eingangsspannung (Ui, Oi) nennenswert überschreitet, wobei am Ausgang eine Ausgangsspannung (UO) bereitgestellt wird und wobei eine Steuerschaltung (S) die beiden Halbleiterschalter (Q1, Q2) derart mit Einschaltimpulsen ansteuert, daß die Ausgangsspannung (UO) in Abhängigkeit von der Last (RL) durch Variation der Einschaltimpuls-Folgefrequenz auf einen konstanten Wert geregelt wird und wobei erfindungsgemäß die maximal zulässige Wiederholrate von Einschaltimpulsen und die Dauer der Einschaltimpulse in Abhängigkeit von der Eingangsspannung (Ui, Oi) gesteuert wird.

FIG 1

EP 0 422 274 A1

# VERFAHREN ZUM STEUERN VON GEGENTAKT-SERIEN-RESONANZWANDLER-SCHALTNETZTEILEN MIT GEREGELTER AUSGANGSSPANNUNG

Die Erfindung betrifft ein Verfahren zum Steuern von Gegentakt-Serien-Resonanzwandler-Schaltnetzteilen mit geregelter Ausgangsspannung nach dem Oberbegriff des Patentanspruches 1.

Resonanzwandler-Schaltnetzteile sind unter anderem aus der US-A-3,596,165, der US-A-4,464,709, der US-A-4,535,399 und der EP-AI-0 293 874 sowie den Anwendungsschriften der Firma Unitrode Integrated Circuit Corporations für die Bauelemente UC1860 bzw. UC3860 bekannt. Bei solchen Schaltnetzteilen werden die Schalttransistoren weitgehend leistungslos, d.h. entweder bei vernachlässigbar kleinem Strom (Zero Current Switch) oder vernachlässigbar kleiner Spannung (Zero Voltage Switch) ein-bzw. ausgeschaltet. Der Vorteil beider Verfahren liegt darin, daß leistungslos geschaltet wird und somit gegenüber sonstigen Schaltnetzteilen eine um etwa eine Größenordnung höhere Schaltfrequenz erzielt werden kann. Zero-Current-Switch-Schaltungen sind für den Weitlastbereich geeignet, in ihren Halbleiterschaltern müssen jedoch die parasitären Kapazitäten umgeladen werden, was unter anderem zu einer Begrenzung der möglichen maximalen Schaltfrequenz führt.

Die US-A-3,596,165 sowie die US-A-4,464,709 zeigen selbstschwingende Resonanzwandler-Schaltnetzteile, die nach dem Gegentaktprinzip arbeiten und bei denen die Schwingung jeweils in Abhängigkeit vom Nulldurchgang unterbrochen wird. Die beiden Leitungsschalttransistoren werden nicht im Stromnulldurchgang umgeschaltet sondern lediglich abgeschaltet. Die Frequenz der Ansteuersignale der Schalttransistoren wird nicht der Eigenfrequenz des Resonanzkreises nachgeführt und zur Regelung der Ausgangsspannung wird lediglich der Arbeitspunkt des Resonanzkreises aus dem Resonanzpunkt verschoben, so daß der Resonanzkreis in Abhängigkeit von der Eingangsspannung und der Last oberhalb bzw. unterhalb seiner Resonanzfrequenz betrieben wird.

Solche Schaltnetzteile arbeiten beispielsweise nach dem Halbwellenprinzip, d.h., daß der Primärstrom nach jeder Halbwelle für eine bestimmte Zeit auf Null bleibt. Eine Nulldurchgangsdetektion ist nicht vorgesehen. Um zu verhindern, daß ein Transistor eingeschaltet wird, bevor der andere ausgeschaltet ist, kann der jeweils andere Transistor beim Einschalten des jeweils einen Transistors beispielsweise durch ein Monoflop gesperrt werden. Hierbei muß die durch das Monoflop vorgesehene Sperrzeit mindestens so groß sein, wie die im ungünstigsten Fall auftretende, längste Dauer einer Primärstromhalbwelle, die vornehmlich von den zulässigen Streuungsbreiten der Last, der Versorgungsspannung und des Trafos bestimmt wird. Die maximale Schaltfrequenz ist hierbei durch das Monoflop festgelegt. Der Ausnutzungsgrad der einzelnen Leistungs-Bauelemente des Schaltnetzteiles sowie der Wirkungsgrad sind bei solchen Schaltungen nicht besonders hoch.

Die US-A-4,535,399 zeigt ein nach dem Gegentaktprinzip arbeitendes Resonanzwandler-Schaltnetzteil, bei dem die Regelung der Ausgangsspannung über die Kombination eines PLL-Regelkreises, der auf die Nulldurchgänge des Laststromes abgestimmt ist, mit dem Prinzip der Pulsbreitenmodulation erfolgt. Über den PLL-Regelkreis werden die Ansteuerfrequenz und die Frequenz des Resonanzkreises synchronisiert. Der Resonanzkreis wird oberhalb seiner Eigenfrequenz betrieben. Zur Synchronisierung dieser beiden Frequenzen wird der Primärstrom des Wandlers über eine Begrenzungsstufe des PLL-Kreises zugeführt. Die Regelung der Ausgangsspannung erfolgt über den nach dem Prinzip der Pulsweitenmodulation arbeitenden Regler. Die Einschaltdauer der beiden Leistungstransistoren hängt dabei direkt von der Ausgangslast bzw. der Eingangsspannung des Resonanzwandlers ab. Dadurch kann nur in einem engen Last- bzw. Eingangsspannungsbereich im Stromnulldurchgang abgeschaltet werden, die Kommutierung des Resonanzkreises wird erzwungen.

Die EP-AI-0 293 874 zeigt Resonanzwandlerschaltnetzteile mit einem Regelverfahren, bei dem die Ansteuerfrequenz in Abhängigkeit von der sekundären Belastung an die jeweilige Eigenfrequenz angepaßt wird. Hierzu wird über einen Nulldurchgangsdetektor der Nulldurchgang des Primärstromes erfaßt und dieser tatsächlich vorliegende Nulldurchgang als Kriterium für das Einschalten und das Ausschalten der Schalttransistoren herangezogen. Dadurch ist die maximale Schaltfrequenz nicht mehr von der Halbwellenform des Primärstromes abhängig, die sich bei ungünstigster Eingangsspannung und ungünstigsten Lastverhältnissen einstellt, so daß der Ausnutzungsgrad der Bauelemente bei solchen Schaltnetzteilen größer ist als der vorgenannter Schaltnetzteile.

Unter anderem aus der US-A-4,727,469 (Kammiller) ist ein geregeltes Gegentakt-Serien-Resonanzwandler-Schaltnetzteil für gattungsgemäße Verfahren bekannt. Kammiller beschreibt ein Schaltnetzteil mit einer Steuerschaltung, mit zwei Leistungsschaltern in Halbbrückenanordnung, deren Verbindungsknoten über eine Serienschaltung aus der Primärwicklung eines Transformators, einer Induktivität und eines Kondensators an ein Bezugspotential geschaltet ist. Durch zwei entsprechend geschaltete Klemmdioden wird hierbei verhindert, daß die Spannung über dem besagten Kondensator das obere oder untere Versorgungspotential nennenswert über- bzw. unterschreiten kann. Die Sekundärseite des Transformators ist über eine Zweiweg- oder Vollwellengleichrichtung an einen Glättungskondensator geschaltet, zu dem eine Last parallel geschaltet werden kann. Über eine Regelschleife wird die Sekundärspannung durch Veränderung der Ansteuerimpulstaktfrequenz konstant gehalten, die über einen VCO gesteuert wird. Der Stromnulldurchgang wird durch einen Nulldurchgangsdetektor erfaßt und die Dauer eines jeden Ansteuerimpulses wird in Abhängigkeit vom Stromnulldurchgang in Abhängigkeit von der Ausgangsspannung des Schaltnetzteiles gesteuert.

Die Dauer des Stromflusses im Resonanzkreis und somit in der Primärwicklung des Übertragers hängt allgemein von der wirksamen Induktivität und von der wirksamen Kapazität des Resonanz kreises, von der Güte des Resonanzkreises, vom Übersetzungsverhältnis des Übertragers, von der Sekundärspannung, die üblicherweise auf einen konstanten Wert geregelt ist und von der Größe der ungeregelten Eingangsspannung ab. Wenn man den Zeitraum vom Einschalten eines Stromes im Resonanzkreis durch einen Ansteuerimpuls bis zum Stromnulldurchgang als "natürliche Stromflußdauer" bezeichnet, so ist die natürliche Stromflußdauer bei einer kleinen Eingangsspannung kleiner als bei großer Eingangsspannung. Im Normallastbereich, wenn also eine lastabhängige Regelung die Sekundärspannung auf einem konstanten Wert hält, ist die natürliche Stromflußdauer auf typische Weise von der Eingangsspannung abhängig.

Um die leistungsabhängigen Bauelemente in einem Resonanzwandlerschaltnetzteil möglichst optimal zu nützen ist bei der kleinsten zulässigen Eingangsspannung die größte Ansteuerimpuls-Folgefrequenz erforderlich, da mit der höchstmöglichen Pulswiederholrate gearbeitet werden muß.

Ein Stromnulldurchgangsdetektor, wie er bei Kammiller verwendet wird, ermöglicht eine Regelung der Dauer der Ansteuerimpulse und über den VCO eine Regelung der Folgefrequenz der Ansteuerimpulse in Abhängigkeit von der Eingangsspannung.

Ein Stromnulldurchgangsdetektor benötigt jedoch unter anderem einen Stromwandler, der üblicherweise nicht monolithisch integrierbar ist, weil er beispielsweise eine Induktivität oder einen Hallsensor enthält. Da im Zuge der monolithischen Integrationstechnik der Preis und die Baugröße eines Resonanzwandler-Schaltnetzteiles maßgeblich durch die nicht integrierbaren Bauelemente, wie z.B. den Übertrager bestimmt sind, ist es erstrebenswert, die Anzahl und auch die Komplexität solcher Bauelemente möglichst gering zu halten.

Aus der DE-OS 25 30 631 sind Schaltnetzteile mit konstanter Arbeitsfrequenz bekannt, bei denen der aus der maximalen Last und der minimalen Eingangsspannung vorgegebene Regelhub durch einen Taktgeber eingestellt wird und entweder ein Hilfsumrichter oder ein RC-Glied über eine Logik-Schaltung den maximalen Regelhub in Abhängigkeit von der Eingangsspannung verändern.

Die aus der DE-OS 25 30 631 bekannten Schaltnetzteile arbeiten mit einer konstanten Arbeitsfrequenz, es handelt sich also nicht um Resonanzwandler-Schaltnetzteile vom Zero-Current-Typ. Eine Regelschaltung regelt die Ausgangsspannung hierbei sowohl in Abhängigkeit von der Eingangsspannung als auch in Abhängigkeit von der Ausgangslast. Bei der kleinsten zulässigen Eingangsspannung und der größten zulässigen Ausgangslast ist hierbei der größtmögliche Regelhub erforderlich. Um eine Sättigung des Übertragers des Schaltnetzteiles bei einer höheren Eingangsspannung und einer hohen Last zu verhindern wird bei solchen bekannten Schaltnetzteilen der Regelhub mit zunehmender Eingangsspannung begrenzt.

Bei Schaltnetzteilen ohne Stromnulldurchgangsdetektor wird die maximale Ansteuerimpuls-Wiederholrate beispielsweise durch eine Monoflopsteuerung vorgegeben. Hierbei wird die maximale Wiederholrate durch die natürliche Stromflußdauer bei maximal zulässiger Eingangsspannung festgelegt. Dadurch arbeiten solche Schaltungen bei niedrigerer Eingangsspannung mit einem ungünstigen Ausnutzungsgrad der Leistungsbauelemente wie Übertrager und Leistungsschalter. Dieser Nachteil stört umso mehr, je größer der zulässige Eingangsspannungsbereich ist.

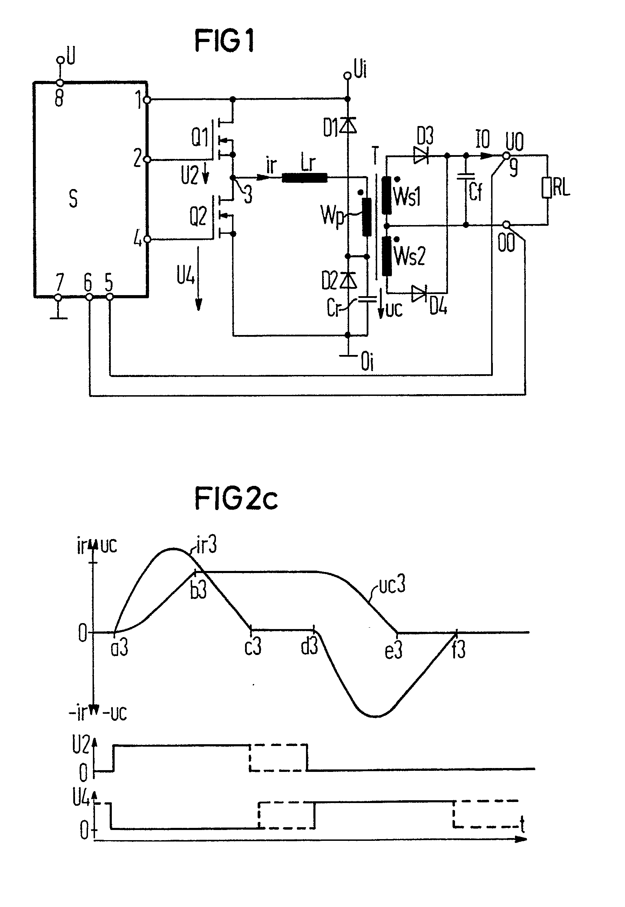

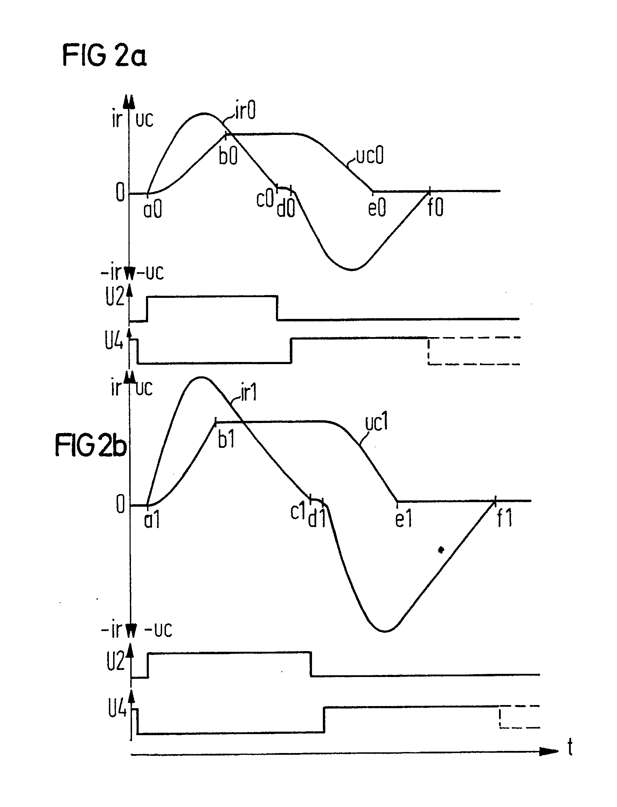

In der Firmenschrift der Fa. Unitrode Corp., Lexington, MA: "Unitrode Switching Regulated Power Supply Design Seminar Manual" von 1986, insbesondere den Kapitel 5, Seiten 5-1 bis 5-12 sowie Seiten 5A-1 bis 5A-3 wird das Prinzip von Gegentakt-Serien-Resonanzwandler-Schaltnetzteilen beschrieben, es wird unter anderem ein Prinzipschaltbild gezeigt, das in Figur 1 wiedergegeben wird, außerdem wird der Stromverlauf im Resonanzkreis dargelegt, der auch in Figur 2 wiedergegeben wird. Außerdem werden Dimensionierungsvorschriften angegeben und eine Ansteuerschaltung gezeigt, die konstante Einschaltzeiten mit entsprechendem Vorhalt für die maximale Eingangsspannung liefern, wie im vorstehenden Absatz beschrieben.

Nachstehend wird das Prinzip gattungsgemäßer Resonanzwandler-Schaltnetzteile, wie es in dieser Unitrod-Schrift beschrieben ist, anhand der Figuren 1 und 2 näher erläutert.

Es zeigt

Figur 1 als Prinzipschaltbild eine mögliche Ausführungsform eines gattungsgemäßen Resonanzwandler-Schaltnetzteiles mit einer Steuereinheit S.

Figur 2 den Strom ir in der Primärwicklung des Resonanzwandlers nach Figur 1 sowie die Spannung uc über der Kapazität Cr des Serienresonanzkreises in Figur 1 über die Zeit aufgetragen in Abhängigkeit von der Eingangsspannung Ui, Oi sowie die für die entsprechenden Strom- und Spannungsverläufe erforderlichen Ansteuerspannungen U2 und U4 der in Halbbrückenschaltung angeordneten Halbleiterschalter.

Figur 1 zeigt ein Resonanzwandler-Schaltnetzteil mit einem Serienresonanzkreis, gebildet aus einer an ein Eingangs-Bezugspotential Oi angeschlossenen Kapazität Cr, deren anderer Anschluß mit der einen Klemme der Primärwicklung Wp eines Transformators T verbunden ist, außerdem mit der Anode einer ersten Freilaufdiode D1 verbunden ist, deren Kathode an ein Eingangspotential Ui angeschlossen ist und außerdem mit der Kathode einer zweiten Freilaufdiode verbunden ist, deren Anode an das Eingangsbezugspotential Oi angeschlossen ist. Die andere Klemme der Primärwicklung Wp ist über eine Induktivität Lp an einen Schaltungsknoten 3 geschaltet. Dieser Schaltungsknoten 3 ist über einen ersten Halbleiterschalter Q1 an das Eingangspotential Ui schaltbar und über einen zweiten Halbleiterschalter Q2 an das Eingangs-Bezugspotential Oi schaltbar. Die Sekundärwicklung Ws1, Ws2 des Transformators ist mit einem Mittelabgriff versehen, der die Ausgangs-Bezugsklemme OO bildet. Die Endabgriffe der Sekundärwicklung Ws1, Ws2 sind jeweils über eine Gleichrichter diode D3 und D4 an die Ausgangsklemme 9 geschaltet. Zwischen der Ausgangsklemme 9 und der Ausgangsbezugsklemme OO ist ein Glättkondensator Cf angeschlossen und eine Last RL anschließbar. An der Klemme 9 wird die Ausgangsspannung UO bereitgestellt. Außerdem ist als Block eine Steuerschaltung 5 dargestellt, die unter anderem folgende Klemmen aufweist: Eine Anschlußklemme 8 zum Anschluß eines Versorgungspotentiales, U eine Anschlußklemme 7 für das Bezugspotential Oi, Anschlußklemmen 5 und 6 zum Einspeisen der Ausgangsspannung UO, eine Ausgangsklemme 2 zum Bereitstellen eines Signales U2 zwischen der Ausgangsklemme 2 und dem Knoten 3, das zum Ansteuern des ersten Halbleiterschalters Q1 vorgesehen ist und eine Ausgangsklemme 4 zum Bereitstellen eines Signales U4 zwischen der Ausgangsklemme 4 und dem Eingangsbezugspotential Oi, das zur Ansteuerung des zweiten Halbleiterschalters Q2 vorgesehen ist. Hierbei stellt die Induktivität Lr die im Resonanzkreis wirksame Induktivität dar, die auch die Streuinduktivität und parasitäre Induktivitäten enthält. Es ist also nicht unbedingt eine zusätzliche Spule zur Realisierung von Lr erforderlich, wenn der Übertrager T entsprechend ausgeführt ist. Die Kapazität Cr enthält als wirksame Kapazität ebenfalls alle im Serien-Resonanzkreis wirksamen Kapazitäten.

Um sogenannte Flankenverluste zu verhindern, sollte die Leitendzeit der Halbleiterschalter Q1 bzw. Q2 jeweils so gesteuert werden, daß diese frühestens dann ausschalten, wenn der Stromfluß im jeweiligen Halbleiterschalter und somit im Resonanzkreis Null geworden ist. Andererseits dürfen die beiden Halbleiterschalter Q1 und Q2 nicht gleichzeitig leiten.

Der Strom ir im Resonanzkreis Lr, Cr verläuft bei solchen Schaltungen, wie aus der oben genannten Firmenschrift der Fa. Unitrode bekannt ist, sinusförmig und ist abhängig von der wirksamen Induktivität Lr, von der wirksamen Kapazität Cr, vom Verhältnis der Induktivität Lr zur Kapazität Cr bzw. dem Gütefaktor des Resonanzkreises, vom Übersetzungsverhältnis n des Übertragers T, von der Eingangsspannung Ui, Oi, die aus der Differenz des Eingangspotentiales Ui und des Eingangsbezugspotentiales Oi gebildet wird und von der Ausgangsspannung Uo. Ist die Eingangsspannung Ui, Oi so groß, daß eine der Freilaufdioden D1 oder D2 leitend wird, so verläuft der Strom ir im Resonanzkreis (wie ebenfalls der oben genannten Firmenschrift zu entnehmen ist) weitgehend linear und ist nur noch von der Induktivität Lr, von der Ausgangsspannung UO und vom Übersetzungsverhältnis n des Übertragers T abhängig. Bei einem gattungsgemäßen Resonanzwandler-Schaltnetzteil sind die wirksame Induktivität Lr, die wirksame Kapazität Cr und somit auch der Gütefaktor des Resonanzkreises und auch das Übersetzungsverhältnis n des Übertragers T konstante Größen. Da die Ausgangsspannung UO von einem Glättkondensator Cf geglättet wird und über eine Regelschaltung konstant gehalten wird, ist also lediglich die Eingangsspannung zwischen dem Eingangspotential Ui und dem Eingangsbezugspotential Oi eine veränderliche Größe.

Da der Pegel des Stromes ir im Resonanzkreis, bei dem eine Freilaufdiode D1 oder D2 leitend wird, mit steigender Eingangsspannung Ui, Oi wächst, die lineare Abnahme des Stromes jedoch unabhängig von der Eingangsspannung konstant bleibt, wächst die Stromflußdauer, also der Zeitraum vom Zeitpunkt a0, a1 bzw. a3 bis zum Zeitpunkt c0, c1 bzw. c3 in Figur 2a, 2b bzw. 2c mit steigender Eingangsspannung Ui, Oi.

Aufgabe der Erfindung ist das Bereitsstellen eines Verfahrens zum Ansteuern eines Gegentakt-Serien-Resonanzwandler-Schaltnetzteiles, bei dem kein Stromnulldurchgangsdetektor erforderlich ist, das jedoch einen guten Ausnutzungsgrad der Leistungsbauelemente auch bei niedrigerer Eingangsspannung ermöglicht.

Diese Aufgabe wird durch ein Verfahren mit den Merkmalen des Patentanspruches 1 gelöst.

Bei gattungsgemäßen Verfahren zum Steuern von Gegentakt-Serien-Resonanzwandler-Schaltnetzteilen wird die Einschaltimpuls-Folgefrequenz für die Leistungsschalter durch eine lastabhängige Regelschaltung RS vorgegeben. Beispielsweise über eine Steuerschaltung S, die die Regelschaltung RS beinhalten kann, wird erfindungsgemäß in Abhängigkeit von der Eingangsspannung Ui, Oi die Dauer der Einschaltimpulse gesteuert und wird außerdem in Abhängigkeit von der Eingangsspannung Ui, Oi der Grenzwert der maximal zulässigen Wiederholrate von die Halbleiterschalter steuernden Einschaltimpulsen festgelegt.

In Weiterbildung der Erfindung wird hierbei zur Erzielung eines möglichst großen Ausnützungsgrades die Dauer der Einschaltimpulse bei minimal zulässiger Eingangsspannung so eingestellt, daß sie möglichst genau der natürlichen Stromflußdauer bei dieser minimal zulässigen Eingangsspannung entspricht und außerdem wird die maximal zulässige Wiederholrate der Einschaltimpulse bei minimal zulässiger Eingangsspannung so festgelegt, daß der Zeitraum zwischen zwei Einschaltimpulsen nur durch die natürliche Stromflußdauer bei dieser Eingangsspannung und durch eine sehr kleine Totzeit festgelegt wird, wobei diese Totzeit vom Schaltverhalten der verwendeten Halbleiterschalter abhängt und so ausgelegt ist, daß die beiden in Halbbrückenschaltung angeordneten Halbleiterschalter gerade sicher nicht gleichzeitig leiten.

Aufgrund der leichteren Realisierbarkeit kann eine Steuerschaltung zum Durchführen erfindungsgemäßer Verfahren so ausgelegt sein, daß die Dauer der Einschaltimpulse und die maximal zulässige Wiederholrate der Einschaltimpulse nur bei der minimal zulässigen Eingangsspannung optimal an die natürlich Stromflußdauer dieser Spannung angepaßt sind und daß die Dauer der Einschaltimpulse und die maximal zulässige Wiederholrate der Einschaltimpulse bei größerer Eingangsspannung derart in Abhängigkeit von dieser größeren Eingangsspannung verändert wird, daß sie größer sind als durch die natürliche Stromflußdauer bei dieser Eingangsspannung erforderlich wäre aber maximal um einen Faktor größer als bei minimal zulässiger Eingangsspannung, der gebildet wird aus dem Quadrat des Verhältnisses der tatsächlichen Eingangsspannung zur minimal zulässigen Eingangsspannung.

Im Folgenden wird die Erfindung anhand der Figuren unter Einbeziehung an sich bekannter physikalischer Gesetzmäßigkeiten näher erläutert. Es zeigt

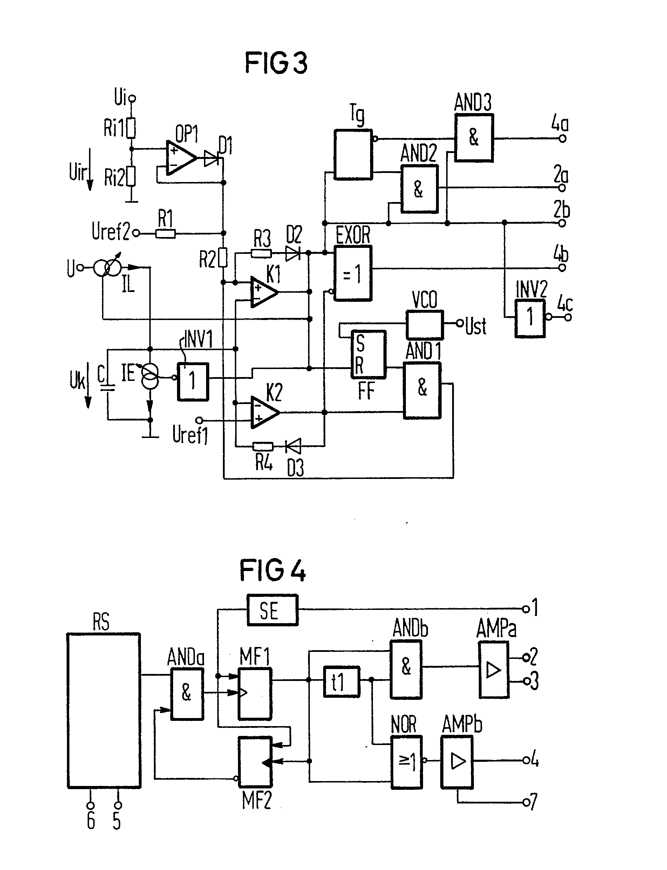

Figur 3 als Ausführungsbeispiel eine mögliche Steuerschaltung zur Durchführung erfindungsgemäßer Verfahren, die in Abhängigkeit von der Eingangsspannung Ui, Oi aus von einer Regelschaltung beeinflußten Impulsen Ansteuerimpulse für die Halbleiterschalter bildet. Hierbei werden Ausgangssignale für drei verschiedene Betriebsarten von Resonanzwandler-Schaltnetzteilen bereitgestellt.

Figur 4 eine andere mögliche Schaltungsanordnung zur Durchführung erfindungsgemäßer Verfahren.

Erfindungsgemäße Verfahren beruhen darauf, daß die Ausschaltzeitpunkte der Halbleiterschalter Q1 bzw. Q2 in Abhängigkeit von der Eingangsspannung Ui, Oi gesteuert werden während die Einschaltzeitpunkte üblicherweise von einem Regelkreis zur Regelung der Ausgangsspannung UO bestimmt werden und außerdem verhindert wird, daß ein von diesem Regelkreis vorgegebener Einschaltimpuls am Halbleiterschalter wirksam wird, solange einem durch den vorhergehenden Einschaltimpuls des Regelkreises eingeleiteten Einschalten eines der Halbleiterschalter Q1 oder Q2 noch kein Ausschalten gefolgt ist. Das heißt unter anderem, daß die Einschaltimpulsfolgefrequenz durch einen Regelkreis festgelegt wird, daß allerdings die maximal zulässige Einschaltimpulsfolgefrequenz in Abhängigkeit von der Eingangsspannung Ui, Oi gesteuert werden kann.

Es gibt drei prinzipielle Methoden zum Ansteuern von Halbleiterschaltern in Halbbrückenschaltung, wie z.B. die Halbleiterschalter Q1 und Q2 in Figur 1.

Die Variante 1 sieht vor, daß abwechselnd erst der eine Halbleiterschalter, z.B. Q1, in Abhängigkeit von einem durch den Regelkreis vorgegebenen Einschaltimpuls eingeschaltet wird und in Abhängigkeit von der Eingangsspannung Ui, Oi nach einer bestimmten Zeit wieder abgeschaltet wird und daß dann, ebenfalls in Ab hängigkeit von einem durch den Regelkreis vorgegebenen Einschaltimpuls der andere Halbleiterschalter eingeschaltet und in Abhängigkeit von der Eingangsspannung Ui, Oi wieder abgeschaltet wird.

Die Variante 2 sieht vor, daß in Abhängigkeit von einem durch den Regelkreis vorgegebenen Einschaltimpuls erst einer der Halbleiterschalter, z.B. Q1 eingeschaltet wird und in Abhängigkeit von der Eingangsspannung Ui, Oi wieder abgeschaltet wird und daß nach Abschalten dieses Halbleiterschalters unmittelbar der andere Halbleiterschalter eingeschaltet und nach der gleichen Zeit, die der vorher eingeschaltete Halbleiterschalter eingeschaltet war wieder abgeschaltet wird und daß ein erneutes Schalten dann wieder vom Regelkreis eingeleitet wird, daß also jeweils eine volle Stromwelle übertragen wird und nur zwischen vollen Stromwellen von der Regelung Pausen vorgesehen werden können.

Die Variante 3 ähnelt der Variante 2, jedoch wird hierbei durch eine feste logische Verriegelung der Ansteuerspannung der beiden Halbleiterschalter Q1 und Q2 dafür gesorgt, daß z.B. der zweite Halbleiterschalter Q2 immer leitet, wenn der erste Halbleiterschalter Q1 sperrt und umgekehrt.

Bei allen drei Varianten muß sichergestellt werden, daß der Schalter Q2 mindestens so lange eingeschaltet bleibt wie zuvor der Schalter Q1. Um einen Kurzschluß zu vermeiden dürfen außerdem die beiden Schalter Q1 und Q2 nie gleichzeitig leiten.

In FIG 2a ist als Kurve ir0 der Verlauf des Stromes ir im Resonanzkreis eines Schaltnetzteiles nach FIG 1 für die Zeit t für den Fall dargestellt, daß die kleinste zulässige Eingangsspannung Uimin zwischen den Eingangspotentialen Ui und Oi angelegt wird, wobei die Schaltung derart dimensioniert ist, daß die Freilaufdioden D1 und D2 bei dieser kleinsten zulässigen Eingangsspannung Uimin gerade noch in den leitenden Zustand kommen, also den Resonanzkreis an die Bezugspotentiale klemmen. Das ist zum funktionieren eines solchen Resonanzwandlers nicht erforderlich, liefert jedoch eine größere Leistungsausbeute, als rein sinusförmig ist. Die Kurve uc0 in FIG 2a zeigt den hierbei sich einstellenden Verlauf der Spannung uc über der Kapazität SGr des Resonanzkreises. Der Pegel U2 gibt den erforderlichen Ansteuerpegel am Steuereingang des ersten Halbleiterschalters Q1 an, also den Pegel zwischen der Klemme 2 und den Knoten 3. Der Pegel U4 gibt den erforderlichen Ansteuerpegel am Steuereingang des zweiten Halbleiterschalters Q2 an. Bevor U2 auf High-Pegel geschaltet werden darf, muß U4 auf Low-Pegel geschaltet werden. Die Totzeit zwischen der fallenden Flanke von U4 und der steigenden Flanke von U2 und auch zwischen der fallenden Flanke von U2 und der steigenden Flanke von U4 ist erforderlich um sicherzustellen, daß kein Kurzschluß geschaltet wird. Ihre Dauer ist sehr klein und vom Schaltverhalten der verwendeten Halbleiterschalter Q1 und Q2 abhängig.

Zum Zeitpunkt a0 wird der erste Halbleiterschalter Q1 durch ein High-Pegel von U2 eingeschaltet. Die Kapazität Cr wird aufgeladen und die Spannung uc steigt an. Der Strom ir im Resonanzkreis zeigt einen sinusförmigen Verlauf bis zum Zeitpunkt b0. Im Zeitpunkt b0 werden die Freilaufdioden leitend und klemmen somit den Kondensator Cr, so daß dieser nicht weiter aufgeladen wird. Ab dem Zeitpunkt b0 bleibt die Spannung uc am Kondensator Cr also weitgehend konstant und der Resonanzkreisstrom ir fällt linear ab, bis er im Zeitpunkt c0 nahezu 0 ist. Zu diesem Zeitpunkt c0 ist die natürliche Stromflußdauer beendet und der Halbleiterschalter Q1 kann verlustfrei abgeschaltet werden.

In FIG 2a und auch in FIG 2b sind der Strom ir und die Spannung uc für den Fall dargestellt, daß entweder ein Ansteuerverfahren der oben beschriebenen Variante 2 oder 3 vorliegt oder daß der Resonanzwandler unter Vollast arbeitet und deshalb nach dem Abschalten des einen Halbleiterschalters, hier Q1, unmittelbar den anderen Halbleiterschalter, hier Q2, einschaltet. In Zeitpunkt c0 wird deshalb die Ansteuerspannung U2 auf Low-Pegel geschaltet und nach einer kurzen Totzeit wird im Zeitpunkt d0 die Ansteuerung U4 auf High-Pegel geschaltet. Ab dem Zeitpunkt d0 steigt der Strom ir im Resonanzkreis mit umgekehrten Vorzeichen mit sinusförmigen Verlauf an und die Spannung uc über der Kapazität Cr fällt unter Beschreibung des beim Aufladen bereits gezeigten Verlaufes ab. Wenn im Zeitpunkt e0 die Kapazität entladen ist und die Spannung uc auf 0 gefallen ist, fließt der Strom ir über die Freilaufdiode weiter und verläuft, wie zuvor, jedoch mit umgekehrten Vorzeichen, nahezu linear, bis er zum Zeitpunkt f0 zu 0 wird. Frühestens zum Zeitpunkt f0 kann der zweite Halbleiterschalter Q2 ohne Flankenverluste abgeschaltet werden indem der Ansteuerpegel U4 auf Low-Potential geschaltet wird. U4 muß nicht bereits zum Zeitpunkt f0 auf Low-Potential geschaltet werden, muß jedoch rechtzeitig auf Low-Potential geschaltet sein, bevor U2 wieder auf High-Potential geschaltet wird. Deshalb ist der Bereich, in dem der Pegel U4 indifferent ist, gestrichelt gezeichnet.

FIG 2b zeigt den gleichen Sachverhalt, jedoch für den Fall, daß eine größere Eingangsspannung Ui eingespeist wird. Ein Vergleich von FIG 2a mit FIG 2b läßt erkennen, daß bei höherer Eingangsspannung Ui der Zeitpunkt b1, in dem die Freilaufdiode die Spannung uc über die Kapazität Cr konstant hält, zwar früher eintritt als der Zeitpunkt b0 bei niedrigerer Eingangsspannung, daß jedoch aufgrund des darauffolgenden linearen Verlaufes des Stromes ir im Resonanzkreis, der bei einem größeren Absolutwert einsetzt, die Zeit zwischen dem Beginn a1 der natürlichen Stromflußdauer und dem Ende c1 der natürlichen Stromflußdauer größer ist als die natürliche Stromflußdauer zwischen dem Zeitpunkt a0 und dem Zeitpunkt c0 bei geringerer Eingangsspannung.

FIG 2c zeigt mit der Kurve ir3 den Verlauf des Stromes ir im Resonanzkreis und mit der Kurve uc3 den Verlauf der Spannung uc über der Kapazität Cr unter den gleichen Bedingungen, wie in FIG 2a dargestellt, jedoch für den Fall einer Ansteuerung nach Variante 1, wobei nicht unmittelbar nach dem Abschalten des ersten Halbleiterschalters Q1, der zweite Halbleiterschalter Q2 eingeschaltet wird, wobei also die Zeit vom Zeitpunkt c3 des Stromnulldurchganges bis zum Einschalten des zweiten Halbleiterschalters Q2 im Zeitpunkt d3 größer ist als die aus Sicherheitsgründen erforderliche Totzeit. In diesem Zeitraum ist der Signalverlauf der Ansteuerpegel U2 und U4 weitgehend beliebig, jedoch muß U2 auf Low-Pegel geschaltet sein bevor U4 auf High-Pegel geschaltet wird.

Um einen guten Ausnützungsgrad der Leistungsbauelemente eines erfindungsgemäß angesteuerten Resonanzwandlerschaltnetzteiles zu erreichen, ist es erforderlich, daß bei der kleinsten zulässigen Eingangsspannung Uimin der Abstand zwischen dem Ausschalten des einen Halbleiterschalters und dem Einschalten des anderen Halbleiterschalters möglichst gering sein darf, so daß die lastabhängige Regelung mit größtmöglicher Frequenz den Resonanzwandler takten kann. Bei größerer Eingangsspannung, wie in FIG 2b dargestellt, vergrößert sich die natürliche Stromflußdauer, so daß auch bei unmittelbarem Umschalten zwischen den beiden Halbleiterschaltern Q1 und Q2 eine geringere Taktfrequenz erzielt würde. Um die gleiche Leistung von der Primärseite des Resonanzwandlers auf die Sekundärseite zu übertragen wie beim unmittelbaren Umschalten zwischen den beiden Halbleiterschaltern Q1 und Q2 bei der kleinstzulässigen Eingangsspannung Uimin, ist bei einer größeren Eingangsspannung Ui jedoch ·eine noch geringere Taktfrequenz erforderlich.

Für die an der Kapazität Cr umgesetzte Leistung P gilt
P = 1/2 · Ui² · Cr · f
wobei f die Frequenz darstellt. Wenn Uimin die minimal zulässige Eingangsspannung darstellt, so ergibt sich für die Frequenz f, die erforderlich ist, um bei einer beliebigen (zulässigen) Eingangsspannung Ui die gleiche Leistung zu übertragen, wie bei minimal zulässiger Eingangsspannung Uimin und unmittelbarem Umschalten der Halbleiterschalter Q1 und Q2, also maximaler Frequenz fmax:

$$f = fmax \cdot (\frac{Uimin}{Ui})^2$$

Aus dieser Gleichung ist zu ersehen, daß zum Umsetzen der gleichen Leistung die erforderliche Wiederholrate von Ansteuerimpulsen mit steigender Eingangsspannung Ui kleiner wird, und zwar mit dem Quadrat des Verhältnisses der Spannung Ui zur minimal zulässigen Eingangsspannung Uimin.

Aus FIG 2a und FIG 2b ist zu erkennen, daß die natürliche Stromflußdauer aufgrund eines linearen Zusammenhanges mit steigender Eingangsspannung größer wird. Deshalb ist bei einer eingangsspannungsabhängigen Steuerung der Einschaltzeiten der Halbleiterschalter Q1 und Q2 nur der Fall der minimal zulässigen Eingangsspannung Uimin kritisch. Nur in diesem Fall ist es erforderlich, daß die Dauer der Ansteuerimpulse auf die natürliche Stromflußdauer abgestimmt ist, daß also ein Ansteuerimpuls in FIG 2 zum Zeitpunkt c (c0, c1, c3) oder zum Zeitpunkt f (f0, f1, f3) beendet ist. Zur Erzielung des gleichen Wirkungsgrades ist bei größerer Eingangsspannung Ui die Dauer der Ansteuerimpulse beliebig, wenn sie zwischen der natürlichen Stromflußzeit bei dieser Eingangsspannung Ui und einer Zeit liegt, die um einen Faktor, gebildet aus dem Quadrat des Verhältnisses der tatsächlichen Eingangsspannung Ui zur minimal zulässigen Eingangsspannung Uimin, von der natürlichen Stromflußzeit bei der minimal zulässigen Eingangsspannung Uimin abweicht.

FIG 3 zeigt eine mögliche Ausführungsform einer Ansteuerschaltung zur Durchführung erfindungsgemäßer Verfahren. Hier ist zu bemerken, daß dem Fachmann beliebig viele Varianten solcher Ansteuerschaltungen geläufig sind, die es ihm bei Kenntnis der Erfindung ermöglichen, erfindungsgemäße Verfahren durchzuführen.

FIG 3 zeigt die Serienschaltung zweier Widerstände Ri1 und Ri2, wobei eine Klemme des Widerstandes Ri1 mit dem Eingangspotential Ui beaufschlagt ist und eine Klemme des Widerstandes Ri2 an Bezugspotential, beispielsweise das Eingangsbezugspotential Oi, angeschlossen ist. Der Knotenpunkt dieser Widerstände Ri1 und Ri2 ist mit dem nichtinvertierenden Eingang eines operationsverstärkers OP1 verbunden. Der Ausgang dieses Operationsverstärkers OP1 ist über eine in Durchlaßrichtung geschaltete Diode an seinen invertierenden Eingang rückgekoppelt. Außerdem ist der invertierende Eingang des Operationsverstärkers OP1 über einen Widerstand R1 an ein oberes Referenzpotential Uref2 geschaltet Sund über einen weiteren Widerstand R2 an den nichtinvertierenden Eingang eines Komparators K1. Dieser nichtinvertierende Eingang des Komparators K1 ist außerdem an den Ausgang eines ersten UND-Gatters AND1 geschaltet und außerdem über die Serienschal tung eines Widerstandes R3 und einer in Durchlaßrichtung gepolten Diode D2 an den Ausgang des Komparators K1 geschaltet. Der invertierende Eingang des Komparators K1 ist mit dem invertierenden Eingang eines Operationsverstärkers K2 verbunden und außerdem an den Stromausgang einer Stromquelle IL, an den Stromeingang einer Stromsenke IE und an einen Anschluß einer Kapazität C geschaltet. Der andere Anschluß des Strompfades der Stromsenke IE und der andere Anschluß der Kapazität C sind an Bezugspotential Masse geschaltet. Der andere Anschluß des Strompfades der Stromquelle IL ist an ein Versorgungspotential U geschaltet. Die Stromquelle IL ist als schaltbare Konstantstromquelle ausgebildet. Ihr Steuereingang ist mit dem Ausgang des Komparators K1 verbunden. Die Stromsenke IE ist als schaltbare Konstantstromsenke ausgebildet. Ihr Steuereingang ist mit dem Ausgang einer ersten Invertierschaltung INV1 verbunden, deren Eingang mit dem Ausgang des Komparators K1 zusammengeschaltet ist. Der Ausgang des Komparators K1 ist außerdem an einer Ausgangsklemme 2b, an den Rücksetzeingang R eines RS-Flops FF, an den Eingang einer bistabilen Kippstufe, im folgenden Toggle Tg genannt, an den Eingang einer zweiten Invertierschaltung INV2, an einen Eingang eines EXKLUSIV-ODER-Gatters EXOR und an jeweils einen Eingang eines zweiten und dritten UND-Gatters AND2 und AND3. Der Setz-Eingang S des RS-Flip-Flops FF wird von einem Oszillator VCO angesteuert, dessen Frequenz durch eine Steuerspannung Ust steuerbar ist. Der nichtinvertierende Eingang des Operationsverstärkers K2 ist mit einer unteren Referenzspannung Uref1 beaufschlagt. Der Ausgang dieses Operationsverstärkers ist über die Serienschaltung einer in Durchlaßrichtung geschalteten Diode D3 und eines Widerstandes R4 an seinen invertierenden Eingang geschaltet, außerdem an einen das Signal invertiert weiterleitenden Eingang des besagten EXKLUSIV-ODER-Gatters EXOR und mit einem Eingang des ersten UND-Gatters AND1 verbunden. Der andere Eingang des UND-Gatters AND1 ist mit dem Ausgang des RS-Flip-Flops FF zusammengeschaltet. Der Ausgang des Invertierers INV2 bildet eine Ausgangsklemme 4c, der Ausgang des EXKLUSIV-ODER-Gatters EXOR bildet eine Ausgangsklemme 4b, der Ausgang des UND-Gatters AND2 bildet eine Ausgangsklemme 2a und der Ausgang des UND-Gatters AND3 bildet eine Ausgangsklemme 4a. Ein Eingang des UND-Gatters AND2 ist mit dem das nichtinvertierte Ausgangssignal bereitstellenden Ausgang des Toggles Tg verbunden. Der das invertierte Ausgangssignal bereitstellende Ausgang des Toggles Tg ist mit einem Eingang des UND-Gatters AND3 zusammengeschaltet.

Diese beschriebene Schaltung verändert die Dauer von an ihren Ausgangsklemmen bereitgestellten Steuerimpulsen in Abhängigkeit von der Eingangsspannung Ui.

In Abhängigkeit von der Eingangsspannung Ui stellt sich am nichtinvertierenden Eingang des Operationsverstärkers OP1 über den Spannungsteiler Ri1, Ri2 die Steuerspannung Uir ein. Der Operationsverstärker OP1 arbeitet als Spannungsfolger mit einer Diode in der Rückführung und hebt das Potential am Verbindungsknoten der Widerstände R1 und R2 über den üblicherweise durch das obere Referenzpotential Uref2 festgelegten Wert, sobald die Steuerspannung Uir einen bestimmten Wert überschreitet und der Ausgang des Komparators K1 auf High-Potential liegt, die Diode D2 also sperrt und das erste UND-Gatter AND1 Low-Pegel liefert. Hierbei ist zu bemerken, daß der Ausgang des ersten UND-Gatters AND1, beispielsweise durch eine in Durchlaßrichtung gepolte Diode, schaltungstechnisch derart ausgestaltet ist, daß ein Low-Pegel am Ausgang des UND-Gatters AND1 keine Beeinflussung des Potentiales am nichtinvertierenden Eingang des Komparators K1 bewirkt.

In der Ausgangsstellung der Schaltung ist der Ausgang des Komparators K1 auf Low-Pegel, die Konstantstromsenke IE also ein geschaltet, und der Operationsverstärker K2, hier ein Differenzverstärker mit definierter Spannungsverstärkung, liefern ein High-Signal derart, daß über die Diode D3 und den Widerstand R4 gerade soviel Strom an die Stromsenke IE gelangt, daß die Spannung Uk über der Kapazität C konstant gehalten wird, beispielsweise auf Uref1. Dadurch ist die Anfangsbedingung für die Kapazität C fest definiert und konstant. Anstelle des Operationsverstärkers K2 mit Dioden-Rückkopplungszweig könnte auch ein zweiter Komparator eingesetzt werden, der bei Erreichen des unteren Referenzpotentials die schaltbare Konstantstromsenke IE abschaltet. Dies könnte derart realisiert sein, daß das Ausgangssignal dieses Komparators K2, wie auch das Ausgangssignal des ersten Komparators K1 invertiert wird und die invertierten Ausgangssignale der beiden Komparatoren als Eingangsgrößen eines weiteren UND-Gatters vorgesehen sind, wobei dieses UND-Gatter die Steuergröße für die schaltbare Konstantstromsenke IE liefert.

Durch kurzes Anheben des Potentiales am nichtinvertierenden Eingang des Komparators K1 über das untere Referenzpotential Uref1 wird ein Aufladen der Kapazität C eingeleitet. Ein High-Pegel am Ausgangs des UND-Gatters AND1 bewirkt ein solches Anheben des Potentiales. Da der Ausgang des Komparators K1 auf Low-Pegel war, war das RS-Flipflop FF rückgesetzt und der Rücksetzeingang R nicht mehr blockiert. Deshalb konnte ein Triggerimpuls, der in Abhängigkeit von der Sekundärspannungsregelung in diesem Ausführungsbeispiel von einem VCO ausgesendet wurde, das RS-Flipflop FF setzen und somit an einen Eingang des UND-Gatters AND1 ein High-Potential legen. Der andere Eingang des UND-Gatters AND1 war über das High-Signal am Ausgangs des Operationsverstärkers K2 freigegeben. Es genügt für eine beschriebene Schaltung, daß der VCO sehr kurze Impulse aussendet, in jedem Fall sollten die Impulse des VCO jedoch kürzer sein, als die kürzest zulässige Einschaltzeit eines Halbleiterschalters Q1 oder Q2. Da die Triggerimpulse des VCO im RS-Flipflop FF gespeichert werden, ist es zulässig, daß sie zu beliebigen Zeitpunkten unsynchronisiert eintreffen. Sie werden über das UND-Gatter ANDI mit dem Schaltzustand des Operationsverstärkers K2 synchro nisiert. Das UND-Gatter AND1 gibt einen gespeicherten Triggerimpuls erst dann an den nichtinvertierenden Eingang des Komparators K1, wenn der Ausgangspegel des Komparators K2 auf High-Potential liegt, was erst nach Beendigung eines eventuell geradeablaufenden Lade/Entladezyklus der Kapazität C der Fall ist.

Wird das Potential am nichtinvertierenden Eingang des Komparators K1 über das untere Referenzpotential angehoben, so schaltet der Ausgang des Komparators K1 ein High-Potential an den Steuereingang der schaltbaren Konstantstromquelle IL und die steuerbare Konstantstromsenke IE wird über den Invertierer INV1 gesperrt. Dadurch wird der Kondensator C aufgeladen, die Spannung Uk steigt bis zu dem Potential an, das entweder über das obere Referenzpotential Uref2 oder durch das Steuerpotential Uir festgelegt wird. Außerdem wird das RS-Flipflop FF rückgesetzt.

Die Zeit tr, die benötigt wird, um an der Kapazität C von dem minimalen Spannungswert Ukmin bis zum maximalen Spannungswert Ukmax zu gelangen, ist folgenderweise zu bestimmen:

$$tr = \frac{Ukmax - Ukmin}{C \cdot IL}$$

Nach Erreichen der maximalen Spannung Ukmax am Kondensator C, die entweder durch das obere Referenzpotential Uref2 oder durch die Steuerspannung Uir vorgegeben wird, schaltet der Komparator K1 um. Deshalb ist die Zeit tr identisch mit der Zeit, während der an der Ausgangsklemme 2b ein High-Pegel ansteht. Die Zeit tr ist bei einer solchen Schaltung proportional zur Eingangsspannung Ui, sobald die Eingangsspannung Ui einen durch das Widerstandverhältnis RI1 und RI2 und durch das obere Referenzpotential Urefz vorgegebenen Wert überschreitet. Erreicht die Spannung Uk den Potentialwert am nichtinvertierenden Eingang des Komparators K1, so schaltet der Komparator K1 am Ausgang auf einen Low-Pegel. Die durch den Widerstand R3 und die Diode D2 realisierte Mitkopplung sichert ein sauberes Umschalten. Das Verhältnis der Widerstandswerte R1 bzw. R2 zu R3 sollte so dimensioniert sein, daß bei maximal zulässiger Eingangsspannung Ui der Pegel am nichtinvertierenden Eingang des Komparators K1 durch die dadurch realisierte Mitkopplung unter den Wert des unteren Referenzpotentiales Uref1 gesenkt wird. Ein Low-Pegel am Ausgang des Komparators K1 schaltet die schaltbare Konstantstromquelle IL ab und über den Invertierer INV1 die Konstantstromsenke IE ein. Die Kapazität C wird durch den Strom der Konstantstromsenke IE entladen, die Spannung Uk fällt von dem Wert Ukmax ab bis zu dem Wert Ukmin. Die Zeit tf, die benötigt wird, um an der Kapazität C von dem maximalen Spannungswert Ukmax bis zum minimalen Spannungswert Ukmin zu gelangen, ist folgenderweise zu bestimmen:

$$tf = \frac{Ukmax - Ukmin}{C \cdot IE}$$

Die Anstiegszeit tr der Spannung Uk über der Kapazität C ist also ungekehrt proportional zur Größe des Ladestromes der Konstantstromquelle IL, die Entladezeit tf ist umgekehrt proportional zur Größe des Entladestromes der Konstantstromsenke IE. In Abhängigkeit davon, ob nur die Ausgangsgröße des Komparators K1 oder auch die Ausgangsgröße des Operationsverstärkers K2 zum Festlegen der Einschaltimpuls-Dauer herangezogen werden und in Abhängigkeit davon, ob eine Ansteuerschaltungsvariante 1, 2 oder 3 verwendet wird, ist es sinnvoll, den Ladestrom der Konstantstromquelle IL gleichgroß zu dimensionieren wie den Entladestrom der Konstantstromsenke IE, oder aber den Ladestrom der Konstantstromquelle IL sehr klein zu wählen gegenüber dem Entladestrom der Konstantstromsenke IE.

Die Spannung Uk über der Kapazität C fällt linear ab, bis sie das untere Referenzpotential Uref1 erreicht. Bei Erreichen des unteren Referenzpotentiales Uref1 schaltet der Ausgang des Operationsverstärkers K2 High-Potential. Der Operationsverstärker K2 ist über den Widerstand R4 und die Diode D3 gegengekoppelt. Der Widerstand R4 ist so dimensioniert, daß bei einem High-Pegel am Ausgang des Operationsverstärkers K2 der durch die Diode D3 und den Widerstand R4 fließende Strom genau so groß ist, wie der Strom der Konstantstromsenke IE. Dadurch wird die Spannung Uk auf einem konstanten unteren Wert Ukmin festgehalten, so daß die Anfangsbedingung für den nächsten Ladevorgang des Kondensators C definiert und konstant ist. Bei einer Ansteuerschaltung nach Figur 3 wird sowohl die Ladezeit tr, als auch die Entladezeit tf der Kapazität C verändert, sobald die Eingangsspannung Ui einen durch das obere Referenzpotential Uref2 festgelegten Wert überschreitet. Diese Änderung der Ladezeit tr bzw. der Entladezeit tf ist dann bei der gezeigten Schaltung von Figur 3 linear abhängig zur Eingangsspannung Ui. Da bei Eingangsspannungen, die unterhalb einer vorgegebenen, über das obere Referenzpotential Uref2 einstellbaren minimal zulässigen Eingangsspannung Ui liegen, die Lade- bzw. Entladezeit der Kapazität C durch das obere Referenzpotential Uref2 festgelegt ist, ist auch für ein langsames Ansteigen der Eingangsspannung Ui beispielsweise nach Inbetriebnahme der Schaltung, sichergestellt, daß keine sinnlos kurzen Einschaltimpulse generiert werden und durch die Verriegelung über das RS-Flipflop FF und das erste UND-Glied AND1 ist sichergestellt, daß nicht vor Beendigung eines Einschaltimpulses der nächste folgt.

Das wesentliche an der in Figur 3 gezeigten Schaltungsanordnung ist darin zu sehen, daß die Ladezeit tr bzw. die Entladezeit tf in Abhängigkeit von der Eingangsspannung Ui variiert werden können. Selbstverständlich ist hierbei nicht nur die Schaltungsanordnung mit einem Operationsverstärker OP1 und einer Diode D1 zum Einkoppeln der Eingangsspannung Ui denkbar. Außerdem sind auch andere Möglichkeiten zum Generieren einer Zeitbasis als die Lade- und Entladezeit einer Kapazität vorstellbar.

Ob nur die Ladezeit tr der Kapazität C zum Generieren von Einschaltimpulsen für Halbleiterschalter herangezogen wird oder auch die Entladezeit tf, liegt im Ermessen des Anwenders und ist unter anderem von der Ansteuervariante abhängig. Figur 3 gibt verschiedene Möglichkeiten an. Da die Aufbereitung der an den Klemmen 2a, 2b, 4a, 4b bzw. 4c bereitgestellten Signale mit Hilfe der Logik-Glieder EXOR, Tg, Inv2, AND2 und AND3 für den Fachmann leicht nachvollziehbar ist, wird im folgenden nur darauf eingegangen, wie die an den einzelnen Ausgangsklemmen bereitgestellten Signale sinnvoll eingesetzt werden können.

Das Signal an Klemme 2a kann als Grundlage für die Steuerspannung U2 zum Realisieren der Ansteuervariante 1 dienen. In diesem Fall kann das Signal an der Ausgangsklemme 4a als Grundlage für die Steuerspannung U4 dienen. Während der Ladezeit tr liegt an Klemme 2a High-Potential, an Klemme 4a liegt Low-Pegel. Während der darauf folgenden Entladezeit tf liegt sowohl an Klemme 2a als auch an Klemme 4a Low-Pegel an. Während der darauf folgenden Ladezeit tr liegt an Klemme 4a High-Pegel an während an Klemme 2a Low-Pegel anliegt. Auch während der darauf folgenden Entladezeit tf der Kapazität C sind wieder die Signale an beiden Klemmen auf Low-Pegel.

Bei einer solchen Schaltung bestimmt die Ladezeit tr der Kapazität C die Einschaltdauer sowohl des ersten als auch des zweiten Halbleiterschalter Q1 und Q2, während die Entladezeit tf zum Einstellen der aus Sicherheitsgründen erforderlichen kurzen Totzeit herangezogen wird. Hierzu ist es sinnvoll, daß der Entladestrom der schaltbaren Konstantstromsenke IE groß ist gegenüber dem Ladestrom der schaltbaren Konstantstromquelle IL. Die Ladezeit ist durch den Strom der schaltbaren Konstantstromquelle IL einstellbar, die Entladezeit durch den Strom der schaltbaren Konstantstromsenke IE. Daß die Totzeit mit steigender Eingangsspannung UI größer wird, ist nicht störend, weil die größte Einschaltimpuls-Folgefrequenz bei der kleinsten zulässigen Eingangsspannung erforderlich ist.

Zum Realisieren der Ansteuervariante 2 kann das Signal an Klemme 2b die Grundlage für das Ansteuersignal U2 des ersten Halbleiterschalter Q1 bilden und das Signal an Klemme 4b kann als Grundlage für das Ansteuersignal U4 des zweiten Halbleiterschalters Q2 herangezogen werden. Dann ist der Halbleiterschalter Q1 während der Ladezeit tr leitend während der Halbleiterschalter Q2 während der Entladezeit tf leitend ist. Die Ladezeit tr darf hierbei nicht größer sein als die Entladezeit tf, sinnvollerweise sollte die Ladezeit genau so groß sein wie die Entladezeit.

Zum Realisieren der Ansteuervariante 3 kann das Signal an Klemme 2b die Grundlage für das Ansteuersignal U2 liefern und das hierzu invertierte Signal an Klemme 4c kann als Grundlage für das Signal U4 herangezogen werden. Das führt dazu, daß während der Ladezeit tr der Halbleiterschalter Q1 leitet und der Halbleiterschalter Q2 sperrt und sonst der Halbleiterschalter Q2 leitet und der Halbleiterschalter Q1 sperrt. Auch hier sollte die Entladezeit mindestens so groß wie die Ladezeit des Kondensators C sein um sicherzustellen, daß keine Restenergie im Übertrager T des Resonanzwandlers verbleibt. Eine Totzeit zwischen den Umschaltvorgängen kann bei dieser und der vorhergehenden Variante unter anderem durch ein Laufzeitglied realisiert sein.

Die Klemmen 2a, 2b, 4a, 4b bzw. 4c stellen selbstverständlich nicht unmittelbar die Ansteuersignale für die Halbleiterschalter Q1 und Q2 bereit, es ist üblicherweise noch eine Verstärker-Schaltung oder zumindest eine Pegelumsetzerschaltung, meist mit induktivem Übertrager oder Opto-Koppler vorzusehen. Figur 4 zeigt als Blockschaltbild eine andere Ausführungsform einer Ansteuerschaltung zur Durchführung erfindungsgemäßer Verfahren.

Figur 4 zeigt eine Regelschaltung RS mit Eingangsklemmen 5 und 6 und eine Ausgangsklemme, die mit einem Eingang eines UND-Gatters ANDa zusammengeschaltet ist. Der Ausgang dieses UND-Gatters ANDa ist mit dem Signaleingang eines auf die steigende Flanke getriggerten Monoflop MF1 mit einstellbarer Zeitkonstante zusammengeschaltet. Der Ausgang dieses Monoflops MF1 ist mit dem Eingang eines weiteren UND-Gatters ANDb, mit dem Eingang eines Laufzeitgliedes t1, mit dem Eingang eines NOR-Gatter NOR und dem Signaleingang eines auf die fallende Flanke getriggerten Monoflops MF2 mit einstellbarer Zeitkonstante verbunden. Der das invertierte Signal dieses auf die fallende Flanke getriggerten Monoflops MF2 bereitstellende Ausgang ist an einen weiteren Eingang des von der Regelschaltung RS angesteuerten UND-Gatter ANDa angeschlossen. Der Ausgang des Laufzeitgliedes t1 ist mit einem weiteren Eingang des von dem auf die steigende Flanke getriggerten Monoflops MF1 angesteuerten UND-Gatters ANDb verbunden und außerdem an einen weiteren Eingang des NOR-Gatters NOR angeschlossen. Der Ausgang des NOR-Gatters NOR ist mit dem Eingang einer Treiberschaltung AMPb zusammengeschaltet, deren Ausgang mit den Ausgangklemmen 4 und 7 verbunden ist. Der Ausgang des von dem Laufzeitglied angesteuerten UND-Gatters ANDb ist mit dem Eingang einer weiteren Treiberschaltung AMPa verbunden, deren Ausgang die Ausgangklemmen 2 und 3 bildet. Die Eingangsklemme 1 ist an eine Steuereinheit SE geschaltet, die in Abhängigkeit von der an der Eingangsklemme 1 anliegenden Eingangsspannung Ui die Zeitkonstante der beiden Monoflops MF1 und MF2 verändert. Der Ausgang dieser Steuereinheit SE ist hierzu jeweils mit dem Steuereingang der beiden Monoflop-Schaltungen MF1 und MF2 verbunden. Gleiche oder ähnliche Bezugzeichen in verschiedenen Figuren stellen gleiche oder ähnliche Schaltungselemente bzw. Größen dar.

Die Regelschaltung erfaßt über die Eingangsklemmen 5 und 6 die Ausgangsspannung eines Resonanzwandler-Schaltnetzteiles nach Figur 1. In Abhängigkeit von dieser Ausgangsspannung legt die Regelschaltung RS Steuerimpulse an den Eingang des UND-Gatters ANDa. Ist das invertierte Ausgangssignal des auf die fallende Flanke getriggerten Monoflops MF2 ein High-Pegel, so wird ein Steuerimpuls der Regelschaltung RS von dem UND-Gatter ANDa an den Signaleingang des auf die steigende Flanke getriggerten Monoflop MF1 geschaltet. Der Ausgang dieses Monoflops wird für die Dauer der Monoflop-Zeitkonstanten auf High-Pegel geschaltet. Über das NOR-Gatter NOR wird die Treiberschaltung AMPb mit Low-Pegel angesteuert. Nach Ablauf der Zeitkonstanten des Laufzeitgliedes t1 wird der Treiber AMPa über das UND-Gatter ANDb mit einem High-Signal angesteuert. Nach Ablauf der Monoflop-Zeitkonstanten des auf die steigende Flanke getriggerten Monoflops MF1 wird über das UND-Gatter ANDb der Treiber AMPa mit Lowpegel angesteuert und nach Ablauf der Zeitkonstanten des Laufzeitgliedes t1 wird über das NOR-Gatter NOR der Treiber AMPb mit High-Pegel angesteuert. Außerdem wird mit der fallenden Flanke am Ausgang des Monoflops MF1 das Monoflop MF2 getriggert und schaltet für die Schaltdauer seiner Monoflop-Zeitkonstanten einen Low-Pegel an das UND-Gatter ANDa, so daß ein weiterer Einschaltimpuls für die Zeit der Monoflop-Zeitkonstanten des Monoflops MF2 unterbunden wird.

Eine solche Schaltungsanordnung ermöglicht über die Ausgangsklemmen 2, 3, 4 und 7 eine Ansteuerung der Halbleiterschalter Q1 und Q2 nach Figur 1 nach der oben erwähnten Variante 3. Hierzu sollten die Zeitkonstanten der beiden Monoflops MF1 und MF2, die jeweils die Einschaltdauer der beiden Halbleiterschalter Q1 und Q2 festlegen, gleich groß sein. Über das Laufzeitglied t1 wird die Totzeit zwischen dem Umschalten der einzelnen Halbleiterschalter Q1 und Q2 eingestellt.

## Ansprüche

1. Verfahren zum Steuern eines Gegentakt-Serien-Resonanzwandler-Schaltnetzteiles mit einem induktiven Übertrager (T) mit einer Primärwicklung (Wp) und mindestens einer Sekundärwicklung (Ws1, Ws2), mit zwei Halbleiterschaltern (Q1, Q2), die in Halbbrückenschaltung zwischen einem Eingangspotential (Ui) und einem Eingangsbezugspotential (Oi) angeordnet sind und zwischen deren Verbindungsknoten (3) und dem Eingangsbezugspotential (Oi) ein Serienresonanzkreis, bestehend aus einer Kapazität (Cr) und einer Induktivität (Lr) in Serie mit der Primärwicklung (Wp) des Übertragers (T) angeordnet ist, wobei Dioden (D1, D2) vorgesehen sind, die verhindern, daß das Potential an der Klemme der Kapazität (Cr), die nicht mit dem Eingangspotential (Ui) bzw. dem Eingangsbezugspotential (Oi) beaufschlagt ist, das Eingangspotential (Ui) bzw. das Eingangsbezugspotential (Oi) nennenswert über- bzw. unterschreitet, wobei auf der Sekundärseite (Ws1, Ws2) des Übertragers (T) ein Gleichrichter (D3, D4) zum gleichrichten der Sekundärspannung des Übertragers (7) vorgesehen ist, wobei am Ausgang dieses Gleichrichters (D3, D4) zwischen einer Ausgangsklemme (9) und einer Ausgangsbezugsklemme (OO) eine Ausgangsspannung (UO) bereitgestellt wird, wobei zwischen die Ausgangsklemme (9) und die Ausgangsbezugsklemme (OO) ein Glättungskondensator (Cf) geschaltet ist, dem eine Last (RL) parallelgeschaltet werden kann und mit einer Steuerschaltung (S), die die beiden Halbleiterschalter (Q1, Q2) derart mit Einschaltimpulsen ansteuert, daß die Ausgangsspannung (UO) in Abhängigkeit von der Last (RL) durch Variation der Einschaltimpuls-Folgefrequenz auf einen konstanten Wert geregelt wird, **dadurch gekennzeichnet,** daß die maximal zulässige Wiederholrate von Einschaltimpulsen und die Dauer der Einschaltimpulse in Abhängigkeit von der Eingangsspannung (Ui, Oi) gesteuert wird.

2. Verfahren nach Anspruch 1,
**dadurch gekennzeichnet,** daß erst bei Überschreiten eines vorgegebenen Wertes der Eingangsspannung (Ui, Oi) die maximal zulässige Wiederholrate von Einschaltimpulsen und die Dauer der Einschaltimpulse in Abhängigkeit von der Eingangsspannung (Ui, Oi) gesteuert wird.

3. Verfahren nach Anspruch 1 oder 2,
**dadurch gekennzeichnet,** daß die Dauer der Einschaltimpulse bei minimal zulässiger Eingangsspannung (Ui, Oi) möglichst genau der natürlichen Stromflußdauer in der Primärwicklung (Wp) des Übertragers (T) entspricht und daß die Wiederholrate der Einschaltimpulse dadurch begrenzt ist, daß erst nach Beendigung eines Einschaltimpulses der nächste Einschaltimpuls folgen darf.

4. Verfahren nach Anspruch 3,

**dadurch gekennzeichnet,** daß die Dauer der Einschaltimpulse nur bei minimal zulässiger Eingangsspannung (Ui, Oi) möglichst genau der natürlichen Stromflußdauer in der Primärwicklung (Wp) des Übertragers (T) entspricht und daß die Dauer der Einschaltimpulse bei größerer als der minimal zulässigen Eingangsspannung (Ui, Oi) größer ist als die natürliche Stromflußdauer in der Primärwicklung des Übertragers, jedoch maximal um einen Faktor größer als die Dauer der Einschaltimpulse bei minimal zulässiger Eingangsspannung, der gebildet wird aus dem Quadrat des Verhältnisses der tatsächlichen Eingangsspannung zur minimal zulässigen Eingangsspannung.

# FIG 1

# FIG 2c

# FIG 2a

# FIG 2b

# FIG 3

# FIG 4

15

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | US-A-4727469 (KAMMILLER) <br> * Spalte 4, Zeile 59 – Spalte 5, Zeile 41; Figur 2 * <br> --- | 1-3 | H02M3/337 |
| A | APEC '88 Conference Proceedings <br> Februar 1988, New Orleans <br> Seiten 167 - 181; D. Temkin et al.: <br> "Development of a Multiple Output Resonant Converter for Space applications" <br> * Seite 170, linke Spalte, letzter Absatz – Seite 174, linke Spalte; Figuren 5, 9, 12 * <br> ----- | 1-4 | |
| | | | **RECHERCHIERTE SACHGEBIETE (Int. Cl.5 )** <br><br> H02M |

Der vorliegende Recherchenbericht wurde für alle Patentansprüche erstellt

| Recherchenort | Abschlußdatum der Recherche | Prüfer |
|---|---|---|
| DEN HAAG | 08 JUNI 1990 | VAN DEN DOEL J. |